# EUROPÄISCHE PATENTSCHRIFT

(11) **EP 1 424 825 B1**
(45) Veröffentlichungstag und Bekanntmachung des Hinweises auf die Patenterteilung: **21.12.2005**
(21) Anmeldenummer: 02406025.3
(22) Anmeldetag: 26.11.2002
(51) Int. Cl.: H04L 29/06

(54) **Verfahren und Vorrichtungen zum Aufbauen eines virtuellen privaten Kommunikationsnetzes zwischen Kommunikationsendgeräten**
Method and apparatus for implementing a virtual private network between network nodes
Procédé et appareil pour l'implémentation d'un réseau virtuel privé entre des terminaux d'un réseau

(43) Veröffentlichungstag der Anmeldung: 02.06.2004
(73) Patentinhaber: Swisscom AG, 3000 Bern 29 (CH)
(72) Erfinder: Danzeisen, Marc, 3012 Bern (CH); Linder, Jan, 3013 Bern (CH); Braun, Torsten, 3084 Wabern (CH)
(74) Vertreter: BOVARD AG

(56) Entgegenhaltungen:
- WO-A-01/43369

## Beschreibung

### Technisches Gebiet

Die vorliegende Erfindung betrifft ein Verfahren und Vorrichtungen zum Aufbauen eines virtuellen privaten Kommunikationsnetzes zwischen Kommunikationsendgeräten. Die Erfindung betrifft insbesondere ein Verfahren, in welchem von einem der Kommunikationsendgeräte eine Benutzeridentifizierung zur Authentifizierung an ein Telekommunikationsnetz übermittelt wird, eine computer-basierte Dienstzentrale, welche mit dem Telekommunikationsnetz verbindbar ist, ein Kommunikationsendgerät mit einem Identifizierungsmodul zum Übermitteln der Benutzeridentifizierung an das Telekommunikationsnetz sowie ein Computerprogrammprodukt, das Computerprogrammcodemittel zur Steuerung eines oder mehrerer Prozessoren des Kommunikationsendgeräts umfasst, derart, dass das Kommunikationsendgerät eine Benutzeridentifizierung an das Telekommunikationsnetz übermittelt.

### Stand der Technik

Virtuelle private Kommunikationsnetze ermöglichen die direkte Kommunikation zwischen Kommunikationspartnern (peer-to-peer), ohne dass unberechtigte Drittparteien der Kommunikation beitreten oder die Kommunikation belauschen können. Im Unterschied zu realen privaten Kommunikationsnetzen werden virtuelle private Kommunikationsnetze über geteilte Kommunikationsmedien aufgebaut und typischerweise mittels kryptografischer Mechanismen von unberechtigten Drittparteien gesichert. Geteilte Kommunikationsmedien umfassen vorwiegend elektromagnetische Wellen, insbesondere im Funkbereich oder im Infrarotbereich. Zur Sicherung der Datenkommunikation über geteilte Kommunikationsmedien sind dem Fachmann verschiedene kryptografische Mechanismen bekannt, zum Beispiel SSL (Secure Socket Layer) zum Erstellen von gesicherten Röhren, so genannten Secure Pipes. Bei der Sicherstellung der Authentizität eines Kommunikationspartners ergeben sich allerdings grössere Probleme, weil selbst die Verwendung von Passwörtern und/oder Benutzeridentifizierungen keine Gewähr bietet, dass diese vom berechtigten Benutzer übermittelt werden.

In der Patentschrift US 6 445 920 werden Vorrichtungen für den Aufbau von virtuellen privaten Kommunikationsnetzen zwischen Kommunikationsendgeräten von Teilnehmern in Mobilfunknetzen beschrieben. Gemäss US 6 445 920 werden Teilnehmer des Mobilfunknetzes, die an einem gemeinsamen virtuellen privaten Kommunikationsnetz teilhaben möchten, in einer Benutzerdatenbank des Mobilfunknetzes, dem so genannten HLR (Home Location Register), mit einer diesbezüglichen speziellen zusätzlichen Kennung registriert. Beim Einbuchen eines Teilnehmers in das Mobilfunknetz wird gemäss US 6 445 920, wie im normierten GSM-Mobilfunknetz (Global System for Mobile Communication), eine Benutzeridentifizierung von einem Identifizierungsmodul im Kommunikationsendgerät des Teilnehmers an das Mobilfunknetz übermittelt und unter Verwendung eines kryptografischen Verfahrens zwischen dem Identifizierungsmodul und einer Zugangskontrolleinheit des Mobilfunknetzes authentifiziert. Teilnehmer, die im Mobilfunknetz mit der speziellen Kennung eines bestimmten virtuellen privaten Kommunikationsnetzes registriert sind, können sich gemäss US 6 445 920 im Mobilfunknetz gegenseitig unter Verwendung von registrierten Kurzwahlnummern anrufen und von reduzierten Kommunikationstarifen profitieren.

In der Patentschrift US 6 445 920 wird zwar das Problem der Authentifizierung der Teilnehmer durch die GSM-Authentifizierung der Benutzeridentifizierungen gelöst, US 6 445 920 liefert jedoch keinen Hinweis darauf, wie mehr als zwei Teilnehmer in einem virtuellen privaten Kommunikationsnetz gemeinsam kommunizieren können oder wie Teilnehmer in einem virtuellen privaten Kommunikationsnetz ausserhalb des Mobilfunknetzes miteinander kommunizieren können. Die Kommunikation zwischen mehreren Kommunikationsendgeräten in virtuellen privaten Kommunikationsnetzen ausserhalb von zellulären Mobilfunknetzen wird jedoch insbesondere mit der Verbreitung von Kommunikationsendgeräten, die mit Kommunikationsschnittstellen für geteilte Kommunikationsmedien ausgerüstet sind, immer wünschenswerter. Kommunikationsendgeräte werden immer häufiger mit Kommunikationsschnittstellen für lokale Kommunikationsnetze basierend auf verteilten Kommunikationsmedien ausgerüstet, beispielsweise WLAN-Module (Wireless Local Area Network), Funkgeräteschnittstellen wie Bluetooth, oder Infrarotgeräteschnittstellen wie IrDA (Infrared Data Association).

Die Offenbarungsschrift WO 01/43369 beschreibt ein Verfahren zum Aufbau eines privaten Netzwerks in einem öffentlichen Netzwerk, beispielsweise Internet. Gemäss WO 01/43369 werden dazu keine speziellen Geräte verwendet. Die Verwaltungsaufgaben im privaten Netzwerk werden in WO 01/43369 von einer Administrationsvorrichtung übernommen, wobei verschiedene Dienste für verschiedene Administrationsaufgaben verwendet werden. Der Dienst SASD ist einerseits für die Authentifizierung und Autorisierung im privaten Netzwerk zuständig, und andererseits übernimmt dieser zentrale Dienst auch die Verteilung der internen Netzwerkadressen und Austausch der Sicherheitsschlüssel unter den beteiligten Knoten. In WO 01/43369 haben die beteiligten Knoten aber keinen Einfluss auf die Verwaltung der Kommunikationskanäle und die Effizienz des ganzen Systems.

### Darstellung der Erfindung

Es ist eine Aufgabe der vorliegenden Erfindung, ein neues Verfahren und neue Vorrichtungen zum Aufbauen eines virtuellen privaten Kommunikationsnetzes zwischen Kommunikationsendgeräten vorzuschlagen, welche nicht die Nachteile des Stands der Technik aufweisen. Das neue Verfahren und die neuen Vorrichtungen sollen insbesondere auch den Aufbau eines virtuellen privaten Kommunikationsnetzes zwischen mehreren Kommunikationsendgeräten über ein geteiltes Kommunikationsmedium ausserhalb von zellulären Mobilfunknetzen ermöglichen.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Vor dem Aufbau eines virtuellen privaten Kommunikationsnetzes zwischen Kommunikationsendgeräten wird von einem ersten Kommunikationsendgerät eine Benutzeridentifizierung an ein Telekommunikationsnetz übermittelt und im Telekommunikationsnetz authentifiziert.

Die oben genannten Ziele werden durch die vorliegende Erfindung insbesondere dadurch erreicht, dass nach der Authentifizierung der Benutzeridentifizierung vom ersten Kommunikationsendgerät eine Anfrage mit Kommunikationsadressen eines oder mehrerer zweiter der Kommunikationsendgeräte über das Telekommunikationsnetz an eine computer-basierte Dienstzentrale übermittelt wird, dass die Anfrage durch die Dienstzentrale über das Telekommunikationsnetz an die durch die Kommunikationsadressen bestimmten zweiten Kommunikationsendgeräte weitergeleitet wird, dass jeweils eine affirmative oder negative Antwort durch die zweiten Kommunikationsendgeräte über das Telekommunikationsnetz an die Dienstzentrale übermittelt wird, wobei eine firmative Antwort Konfigurationsdaten mit Kommunikationsparametern und mit Sicherheitsparametern des betreffenden der zweiten Kommunikationsendgeräte umfasst, dass Konfigurationsdaten mit Kommunikationsparametern und mit Sicherheitsparametern zwischen dem ersten Kommunikationsendgerät und den zweiten Kommunikationsendgeräten über das Telekommunikationsnetz ausgetauscht werden, und dass ein gesichertes virtuelles privates Kommunikationsnetz zwischen dem ersten Kommunikationsendgerät und den zweiten Kommunikationsendgeräten unter Verwendung der ausgetauschten Konfigurationsdaten über ein geteiltes Kommunikationsmedium aufgebaut wird. Die Einleitung des Aufbaus des virtuellen privaten Kommunikationsnetzes über ein Telekommunikationsnetz mit Authentifizierungsmechanismen gewährleistet, dass nur Kommunikationsendgeräte mit authentifizierter Benutzeridentifizierung miteinbezogen werden. Der Austausch von Konfigurationsdaten zwischen dem ersten Kommunikationsendgerät und den zweiten Kommunikationsendgeräten über das Telekommunikationsnetz ermöglicht einerseits in einer heterogenen Umgebung mit unterschiedlichen Kommunikationsendgeräten, die über unterschiedliche Kommunikationsschnittstellen verfügen und unterschiedliche Kommunikationsprotokolle unterstützen, das zu verwendende geteilte Kommunikationsmedium über einen etablierten Kommunikationskanal, nämlich das Telekommunikationsnetz, in den beteiligten Kommunikationsendgeräten zu konfigurieren. Andererseits ermöglicht der Austausch der Konfigurationsdaten zwischen den Kommunikationsendgeräten die Sicherheitsparameter für die Siche rung des virtuellen privaten Kommunikationsnetzes über den etablierten Kommunikationskanal unter den beteiligten Kommunikationsendgeräten zu verteilen. Die Authentifizierung der Benutzer und der Austausch der Konfigurationsdaten ermöglicht gesicherte virtuelle private Kommunikationsnetze ad hoc, das heisst dynamisch und spontan ohne vorgängige feste Konfiguration, in heterogenen Umgebungen aufzubauen. Die Übermittlung der Kommunikationsparameter und Sicherheitsparameter zusammen mit der Antwort an die Dienstzentrale reduziert zudem die Zeit, die für den Aufbau des virtuellen privaten Kommunikationsnetzes benötigt wird.

In einer bevorzugten Ausführungsvariante werden mit der Anfrage des ersten Kommunikationsendgeräts Konfigurationsdaten, die Kommunikationsparameter und Sicherheitsparameter des ersten Kommunikationsendgeräts umfassen, an die Dienstzentrale übermittelt, die Dienstzentrale erstellt basierend auf den Konfigurationsdaten vom ersten Kommunikationsendgerät und basierend auf den Konfigurationsdaten der zweiten Kommunikationsendgeräte Konfigurationsdatensätze für den Aufbau des gesicherten virtuellen privaten Kommunikationsnetzes zwischen dem ersten Kommunikationsendgerät und den zweiten Kommunikationsendgeräten, die Dienstzentrale übermittelt die erstellten Konfigurationsdatensätze zur Speicherung über das Telekommunikationsnetz an das erste Kommunikationsendgerät und an die zweiten Kommunikationsendgeräte, und das erste Kommunikationsendgerät und die zweiten Kommunikationsendgeräte bauen das gesicherte virtuelle private Kommunikationsnetz zwischen dem ersten Kommunikationsendgerät und den zweiten Kommunikationsendgeräten basierend auf den gespeicherten Konfigurationsdatensätzen auf. Die Übermittlung der Kommunikationsparameter und Sicherheitsparameter zusammen mit der Anfrage an die Dienstzentrale reduziert die Anzahl Datentransaktionen und damit die Zeit, die für den Aufbau des virtuellen privaten Kommunikationsnetzes benötigt wird. Die zentralisierte Erstellung von Konfigurationsdatensätzen auf Grund der gesammelten Konfigurationsdaten der beteiligten Kommunikationsendgeräte hat den Vorteil, dass der Datenverkehr für Konfigurationsverhandlungen zwischen den beteiligten Kommunikationsendgeräten reduziert werden kann, was wiederum die für den Aufbau des virtuellen privaten Kommunikationsnetzes benötigte Zeit reduziert, und dass die Konfiguration der einzelnen Kommunikationsendgeräte nicht mühsam und fehleranfällig durch die Benutzer der beteiligten Kommunikationsendgeräte durchgeführt werden muss, sondern automatisiert durch die Dienstzentrale vorgenommen wird.

In einer bevorzugten Ausführungsvariante werden mit der Anfrage des ersten Kommunikationsendgeräts Konfigurationsdaten, die Kommunikationsparameter und Sicherheitsparameter des ersten Kommunikationsendgeräts umfassen, an die Dienstzentrale übermittelt, die Konfigurationsdaten des ersten Kommunikationsendgeräts werden durch die Dienstzentrale mit der Anfrage an die zweiten Kommunikationsendgeräte übermittelt, die zweiten Kommunikationsendgeräte bestimmen die Konfigurationsdaten zur Übermittlung an die Dienstzentrale basierend auf den empfangenen Konfigurationsdaten des ersten Kommunikationsendgeräts, die Dienstzentrale erstellt basierend auf den Konfigurationsdaten vom ersten Kommunikationsendgerät und basierend auf den Konfigurationsdaten der zweiten Kommunikationsendgeräte Konfigurationsdatensätze für den Aufbau des gesicherten virtuellen privaten Kommunikationsnetzes zwischen dem ersten Kommunikationsendgerät und den zweiten Kommunikationsendgeräten, und die Dienstzentrale übermittelt die erstellten Konfigurationsdatensätze über das Telekommunikationsnetz an das erste Kommunikationsendgerät und an die zweiten Kommunikationsendgeräte. Gegenüber der vorgehend beschriebenen bevorzugten Ausführungsvariante hat die Weiterleitung der Konfigurationsdaten des ersten Kommunikationsendgeräts an die zweiten Kommunikationsendgeräte zusätzlich den Vorteil, dass die Konfigurationsdaten, die von den zweiten Kommunikationsendgeräten an die Ausführungszentrale übermittelt werden, auf solche reduziert werden können, die vom ersten Kommunikationsendgerät hardwaremässig unterstützt werden. Die Reduktion des Datenverkehrs reduziert wiederum die für den Aufbau des virtuellen privaten Kommunikationsnetzes benötigte Zeit. Fehlende softwaremässige Unterstützung kann gegebenenfalls durch die Dienstzentrale durch Einfügen von fehlenden Softwaremodulen in die Konfigurationsdatensätze behoben werden, beispielsweise zusätzliche Softwaremodule für die Unterstützung von bestimmten Kommunikationsprotokollen.

In einer Ausführungsvariante leitet die Dienstzentrale die Antworten der zweiten Kommunikationsendgeräte an das erste Kommunikationsendgerät weiter, das erste Kommunikationsendgerät erstellt basierend auf den Konfigurationsdaten der zweiten Kommunikationsendgeräte und basierend auf Konfigurationsdaten mit Kommunikationsparametern und mit Sicherheitsparametern, die im ersten Kommunikationsendgerät gespeichert sind, Konfigurationsdatensätze für den Aufbau des gesicherten virtuellen privaten Kommunikationsnetzes zwischen dem ersten Kommunikationsendgerät und den zweiten Kommunikationsendgeräten, und das erste Kommunikationsendgerät übermittelt die erstellten Konfigurationsdatensätze über das Telekommunikationsnetz an die zweiten Kommunikationsendgeräte respektive speichert sie im ersten Kommunikationsendgerät. Falls eine automatisierte Konfiguration der einzelnen Kommunikationsendgeräte, das heisst die automatisierte Erstellung der Konfigurationsdatensätzen auf Grund der gesammelten Konfigurationsdaten der beteiligten Kommunikationsendgeräte, nicht in der Dienzentrale vorgenommen werden kann, kann diese Aufgabe auch im anfragenden ersten Kommunikationsendgerät durchgeführt werden.

Die Kommunikationsendgeräte sind vorzugsweise Mobilfunkendgeräte. Das Telekommunikationsnetz ist vorzugsweise ein zelluläres Mobilfunknetz. Die Benutzeridentifizierung ist vorzugsweise eine IMSI (International Mobile Subscriber Identity). Die Benutzeridentifizierung wird im Mobilfunknetz vorzugsweise mittels eines mit dem Mobilfunkendgerät verbundenen Identifizierungsmoduls und mittels einer Authentifizierungseinheit des Mobilfunknetzes authentifiziert. Die Kommunikationsadressen sind vorzugsweise Rufnummern im Mobilfunknetz. Das geteilte Kommunikationsmedium ist vorzugsweise eine auf elektromagnetischen Wellen basierende Kommunikationsschnittstelle. Die Kommunikationsparameter umfassen vorzugsweise Identifizierungen von unterstützten Kommunikationsprotokollen und/oder -schnittstellen und die Sicherheitsparameter umfassen vorzugsweise kryptografische Schlüssel.

Die für das vorliegende Verfahren verwendeten Vorrichtungen zum Aufbauen eines virtuellen privaten Kommunikationsnetzes zwischen Kommunikationsendgeräten umfassen Kommunikationsendgeräte, die vorzugsweise mindestens eine Kommunikationsschnittstelle für ein auf elektromagnetischen Wellen basierendes geteiltes Kommunikationsmedium umfassen, eine mit dem Telekommunikationsnetz verbindbare computer-basierte Dienstzentrale sowie ein Computerprogrammprodukt, das Computerprogrammcodemittel zur Steuerung eines oder mehrerer Prozessoren des Kommunikationsendgeräts umfasst.

### Kurze Beschreibung der Zeichnungen

Nachfolgend wird eine Ausführung der vorliegenden Erfindung anhand eines Beispieles beschrieben. Das Beispiel der Ausführung wird durch die folgenden beigelegten Figuren illustriert:
Figur 1 zeigt ein Blockdiagramm, welches schematisch mehrere in einem virtuellen privaten Kommunikationsnetz verbundene Kommunikationsendgeräte darstellt, die zudem mit einem Telekommunikationsnetz verbunden sind.
Figur 2 zeigt ein Zeitdiagramm, das schematisch einen möglichen Verfahrensablauf und Datenaustausch beim Aufbau eines virtuellen privaten Kommunikationsnetzes zwischen mehreren Kommunikationsendgeräten illustriert.

### Wege zur Ausführung der Erfindung

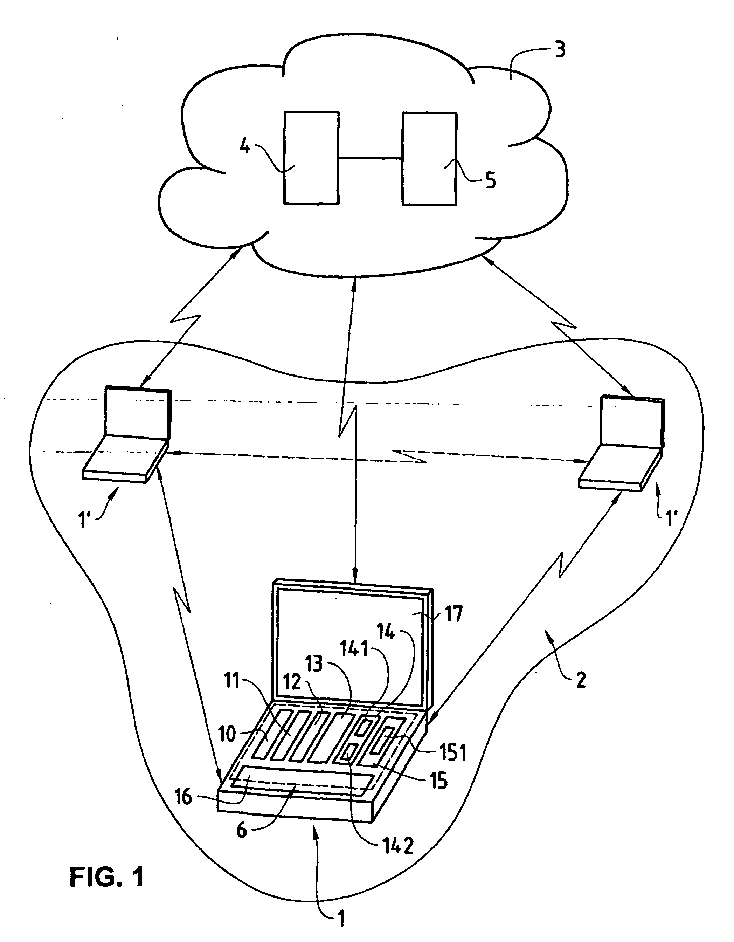

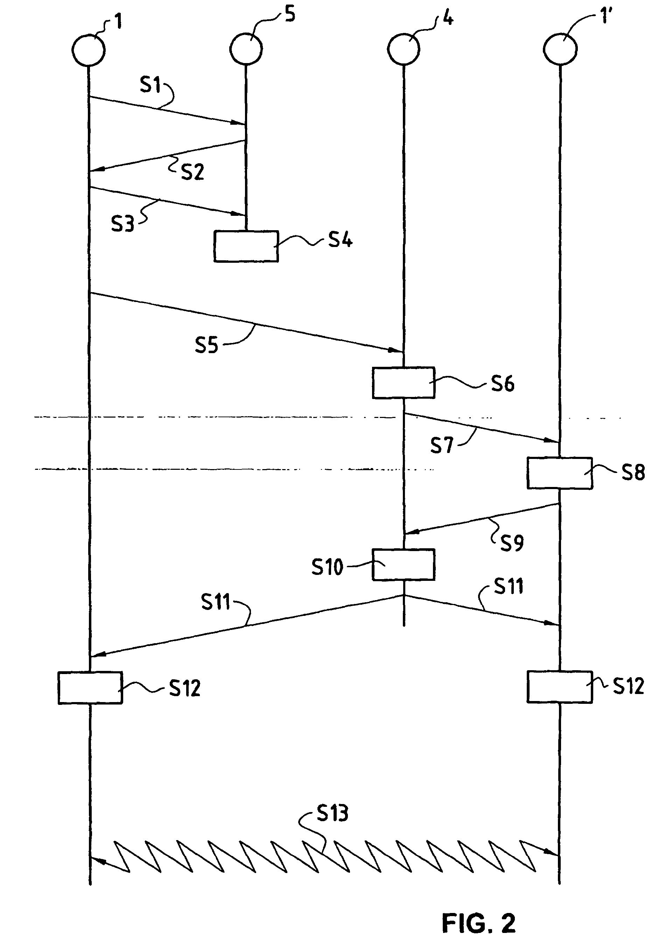

In den Figuren 1 und 2 werden einander entsprechende, gleiche Komponenten durch gleiche Bezugszeichen bezeichnet.

In der Figur 1 bezeichnet das Bezugszeichen 3 ein Telekommunikationsnetz, vorzugsweise eine zelluläres Mobilfunknetz, beispielsweise ein GSM-(Global System for Mobile Communication) oder ein UMTS-Netz (Universal Mobile Telecommunications System) oder ein anderes, beispielsweise satellitenbasiertes-Mobilfunknetz. Das Telekommunikationsnetz 3 kann auch ein Festnetz umfassen, beispielsweise das Internet und/oder ein LAN (Local Area Network).

Das Telekommunikationsnetz 3 umfasst eine Zugangskontrolleinheit 5, beispielsweise eine HLR-Einheit (Home Location Register), eine VLR-Einheit (Visitor Location Register) oder eine SGSN-Einheit (Serving GPRS Support Node, GPRS - General Packet Radio Service), die jeweils mit einer AuC-Einheit (Authentication Centre) verbunden sind.

Wie in der Figur 1 schematisch dargestellt wird, ist die Zugangskontrolleinheit 5 mit einer computer-basierten Dienstzentrale 4 verbunden. Die computer-basierte Dienstzentrale 4 umfasst funktionale Module zur Ausführung von Funktionen, die später mit Bezug zur Figur 2 näher beschrieben werden. Die funktionalen Module der Dienstzentrale 4 sind vorzugsweise als programmierte Softwaremodule ausgeführt, die einen oder mehrere Prozessoren der Dienstzentrale 4 steuern. Der Fachmann wird verstehen, dass die funktionalen Module teilweise oder vollständig hardwaremässig ausgeführt werden können.

In der Figur 1 bezeichnen die Bezugszeichen 1 und 1' Kommunikationsendgeräte, die mit dem Telekommunikationsnetz 3 verbindbar sind. In der Figur 1 ist nur das Kommunikationsendgerät 1 detailliert dargestellt, die Kommunikationsendgeräte 1' sind jedoch entsprechend aufgebaut, wobei allerdings die Module 14 und 15 inhaltliche und die Module 16 funktionale Unterschiede aufweisen können. Die Kommunikationsendgeräte 1 und 1' sind vorzugsweise mobile Kommunikationsendgeräte, beispielsweise Mobilfunktelefone oder Laptop- oder PDA-Computer (Personal Digital Assistant) mit einem Kommunikationsmodul 16, das Komponenten für die Kommunikation über das Telekommunikationsnetz 3 umfasst. Das Kommunikationsmodul 16 umfasst mindestens eine Kommunikationsschnittstelle für die Kommunikation über ein geteiltes Kommunikationsmedium, das auf elektromagnetischen Wellen insbesondere im Funkbereich oder im Infrarotbereich basiert. In der Tabelle 1 ist beispielhaft ein Schichtenmodell des Kommunikationsmoduls 16 und der darüber liegenden Applikationsschicht dargestellt. Wie in der Tabelle 1 dargestellt ist, umfasst das Kommunikationsmodul 16 physikalische Kommunikationsschnittstellen für den Infrarotbereich, beispielsweise für IrDA, und für den Funkbereich, beispielsweise für WLAN, zum Beispiel gemäss IEEE 802.11, für Bluetooth, für Mobilfunknetze, zum Beispiel gemäss GSM oder UMTS, und/oder für HomeRF (Home Radio Frequency). Das Kommunikationsmodul 16 umfasst zudem Kommunikationsschnittstellen für verdrahtete LANs. Das Kommunikationsmodul 16 umfasst überdies Software- und/oder Hardwaremodule zur Ausführung von Kommunikationsprotokollen und zugeordnete Kommunikationsparameter für die Steuerung der physikalischen Kommunikationsschnittstelle(n). Wie in der Tabelle 1 dargestellt ist, umfasst das Kommunikationsmodul 16 beispielsweise Software- und/oder Hardwaremodule zur Ausführung von IrDA, WLAN, zum Beispiel gemäss IEEE 802.11, Bluetooth, HSCSD (High Speed Circuit Switched Data) und GPRS über Mobilfunknetze, HomeRF und/oder LANs. Als Schnittstelle zu der Applikationsschicht und für die Ausführung der Kommunikationstransportkontrolle umfasst das Kommunikationsmodul 16 weitere Softwaremodule, beispielsweise gemäss TCP (Transmission Control Protocol) oder UDP (User Datagram Protocol). Das Kommunikationsmodul 16 umfasst auch Software- und/oder Hardwaremodule zur Ausführung von kryptografischen Verfahren und Algorithmen sowie zugeordnete Sicherheitsparameter. Wie in der Tabelle 1 dargestellt ist, umfasst das Kommunikationsmodul 16 beispielsweise Software- und/oder Hardwaremodule zur Ausführung von IPSec (IP Security Protocol, IP - Internet Protocol), EAP 802.1x/WEP (Extensible Authentication Protocol/Wired Equivalent Privacy), PPPoE (Point to Point over Ethernet) und/oder SSL/TLS (Secure Socket Layer/Transport Layer Security).

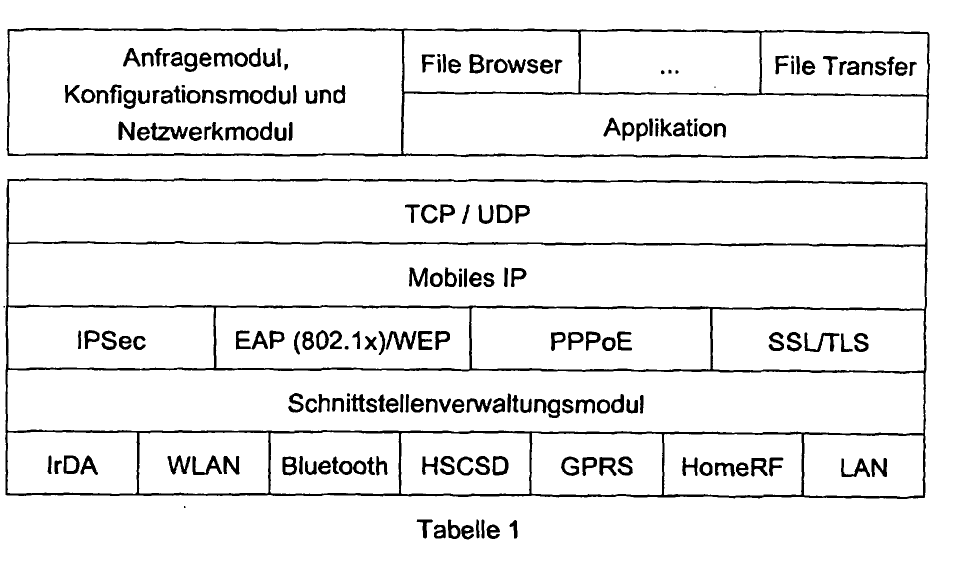

Das Kommunikationsmodul 16 umfasst zudem ein Modul zur Ausführung vom Mobilen Internet Protocol (Mobile IP, Internet Engineering Task Force, IEFT RFC 2002, Okt. 1996) und ein Schnittstellenverwaltungsmodul, das in der Patentanmeldung PCT/CH02100311 beschrieben wird, die zum Anmeldezeitpunkt der vorliegenden Anmeldung noch nicht veröffentlicht war. Das Mobile IP ermöglicht einem mobilen Kommunikationsendgerät 1, 1' das Internet Protokoll mobil zu benützen, wofür dem Kommunikationsendgerät 1, 1' eine dynamische IP-Momentanadresse zu seiner statischen IP-Heimadresse zugeordnet wird. Das Schnittstellenverwaltungsmodul führt eine Tabelle mit den vom Kommunikationsendgerät 1, 1' unterstützten physikalischen Kommunikationsschnittstellen, die momentan verfügbar sind und deren IP-Adressen einer virtuellen IP-Adresse zugeordnet werden. Durch die Anbindung der jeweils aktuell verwendeten physikalischen Kommunikationsschnittstelle über eine virtuelle IP-Adresse an die darüber liegenden Schichten, ermöglicht das Schnittstellenverwaltungsmodul den dynamischen Wechsel der physikalischen Kommunikationsschnittstellen, ohne die Datenkommunikation aus der Sicht der darüber liegenden Schichten zu unterbrechen.

Die Kommunikationsendgeräte 1 und 1' umfassen jeweils ein Identifizierungsmodul 15, in welchem eine Benutzeridentifizierung 151 gespeichert ist, vorzugsweise eine IMSI (International Mobile Subscriber Identity). Das Identifizierungsmodul 15 umfasst zudem Authentifizierungsfunktionen und kryptografische Schlüssel und ist vorzugsweise als SIM (Subscriber Identification Module) oder USIM (Universal Subscriber Identification Module) für ein GSM- respektive UMTS-Netz ausgeführt.

Das Bezugszeichen 14 bezeichnet gespeicherte Konfigurationsdaten, die Kommunikationsparameter 141 und Sicherheitsparameter 142 umfassen. Die Kommunikationsparameter 141 umfassen Identifizierungen von physikalischen Kommunikationsschnittstellen und von dafür geeigneten Kommunikationsprotokollen, die durch das betreffende Kommunikationsendgerät 1, 1' respektive durch das betreffende Kommunikationsmodul 16 unterstützt werden. Die Kommunikationsparameter 141 umfassen zudem schnittstellen- und protokollspezifische Kommunikationsparameter wie Angaben über Sende- und Empfangsfrequenzen, Kanalidentifizierungen, Modulationsarten, Sendeleistung oder Antennenabstrahlungsrichtung. Die Sicherheitsparameter 142 umfassen kryptografische Schlüssel und Identifizierungen von kryptografischen Algorithmen und Verfahren, die durch das betreffende Kommunikationsendgerät 1, 1' respektive durch das betreffende Kommunikationsmodul 16 unterstützt werden.

Die Kommunikationsendgeräte 1 und 1' umfassen zudem jeweils mehrere funktionale Module 10, 11, 12 und 13 zur Ausführung von Funktionen, die später mit Bezug zur Figur 2 näher beschrieben werden. Die funktionalen Module 10, 11, 12 und 13 sind vorzugsweise als programmierte Softwaremodule ausgeführt, die einen oder mehrere Prozessoren der Kommunikationsendgeräte 1 und 1' steuern. Der Fachmann wird verstehen, dass die funktionalen Module 10, 11, 12 und 13 teilweise oder vollständig hardwaremässig ausgeführt werden können. Wie durch das Bezugszeichen 6 angedeutet wird, sind die funktionalen Module 10, 11, 12 und 13, die Konfigurationsdaten 14 und das Identifizierungsmodul 15 sowie die Software-basierten Teile des Kommunikationsmoduls 16 auf einem oder mehreren Computerprogrammprodukten ausgeführt. Das respektive die Computerprogrammprodukte 6 umfassen ein computerlesbares Medium mit den darin enthaltenen Computerprogrammcodemitteln zur Steuerung des oder der Prozessoren der Kommunikationsendgeräte 1, 1'. Die Computerprogrammprodukte 6 können beispielsweise in Form von CDs (Compact Discs), Disketten, Speichermodulen, ROM (Read Only Memory), RAM (Random Access Memory) oder Chipkarten ausgeführt werden. Das Identifizierungsmodul 15 ist vorzugsweise auf einer Chipkarte ausgeführt.

In der Figur 1 bezeichnet das Bezugszeichen 2 ein gesichertes virtuelles privates Kommunikationsnetz, das ad hoc aufgebaut wurde und die direkte Kommunikation (peer-to-peer) zwischen den Kommunikationsendgeräten 1 und 1' ermöglicht.

In den folgenden Abschnitten werden mit Bezug auf die Figur 2 der Verfahrensablauf und der damit verbundene Datenaustausch für den Aufbau des virtuellen privaten Kommunikationsnetzes 2 beschrieben.

Wenn der Benutzer sein Kommunikationsendgerät 1 aktiviert, versucht sich dieses im Telekommunikationsnetz 3 einzubuchen und übermittelt im Schritt S1 die Benutzeridentifizierung 151 an die Zugangskontrolleinheit 5 im Telekommunikationsnetz 3.

Im Schritt S2 übermittelt die Zugangskontrolleinheit 5 eine Authentifizierungsanforderung über das Telekommunikationsnetz 3 an das Kommunikationsendgerät 1, welche unter Verwendung kryptografischer Mechanismen spezifisch für die im Schritt S1 empfangene Benutzeridentifizierung erzeugt wurde.

Im Schritt S3 übermittelt das Kommunikationsendgerät 1 eine Authentifizierungsantwort über das Telekommunikationsnetz 3 an die Zugangskontrolleinheit 5, wobei die Authentifizierungsantwort unter Verwendung eines im Kommunikationsendgerät 1 gespeicherten kryptografischen Schlüssels aus der im Schritt S2 erhaltenen Authentifizierungsanforderung erzeugt wurde.

Im Schritt S4 überprüft die Zugangskontrolleinheit 5 die im Schritt S3 empfangene Authentifizierungsantwort und bucht das Kommunikationsendgerät 1 unter der im Schritt S1 empfangenen Benutzeridentifizierung im Telekommunikationsnetz 3 ein, falls die Benetzeridentifizierung auf Grund der im Schritt S3 empfangenen Authentifizierungsantwort positiv authentifiziert werden konnte.

Die Schritte S1 bis S4 werden vorzugsweise zwischen dem Identifizierungsmodul 15 und der Zugangskontrolleinheit 5 gemäss dem Authentifizierungsverfahren ausgeführt, das für das GSM- oder UMTS-Netz definiert wurde (siehe beispielsweise die GSM Normen, insbesondere GSM 2.09, vom European Telecommunications Standards Institute ETSI, erhältlich bei der untenstehenden Adresse, respektive das Dokument "Technical Specification: 3rd Generation Partnership Project; Technical Specification Group Services and System Aspects; 3G Security; Security Architecture"; Ausgabe 1999; 3GPP TS 33.102 V3.12.0, Juni 2002; Kapitel C.2 und C.3.2; erhältlich bei: GPP Support Office Address, 650 Route des Lucioles - Sophia Antipolis, Valborne, France).

Im Schritt S5 übermittelt das Anfragemodul 10 des Kommunikationsendgeräts 1 eine Anfrage für den Aufbau des virtuellen privaten Kommunikationsnetzes 2 über das Telekommunikationsnetz 3 an die Dienstzentrale 4. Die Übermittlung erfolgt beispielsweise mittels SMS- (Short Messaging System) oder USSD-Kurzmeldungen (Unstructured Supplementary Services Data) oder mittels Datendiensten wie HSCSD, GPRS oder mittels WAP (Wireless Application Protocol). Die Anfrage umfasst Kommunikationsadressen der Kommunikationsendgeräte 1', mit denen das virtuelle private Kommunikationsnetz 2 aufgebaut werden soll. Die Kommunikationsadressen sind vorzugsweise Rufnummern der Kommunikationsendgeräte 1' im Telekommunikationsnetz 3, so genannte MSISDN-Nummern (Mobile Subscriber ISDN, ISDN - Integrated Services Digital Network). Vorzugsweise umfasst die Anfrage zudem Konfigurationsdaten, die Kommunikationsparameter und Sicherheitsparameter des Kommunikationsendgeräts 1 umfassen. Die Konfigurationsdaten werden im Kommunikationsendgerät 1 durch das Konfigurationsmodul 11 bestimmt, basierend auf den gespeicherten Konfigurationsdaten 14 sowie basierend auf der Verfügbarkeit von physikalischen Kommunikationsschnittstellen des Kommunikationsmoduls 16 und/oder basierend auf einer Selektion durch den Benutzer.

Im Schritt S6 werden die im Schritt S5 empfangenen Konfigurationsdaten in der Dienstzentrale 4 einer Anfragereferenz zugeordnet abgespeichert. Die Anfragereferenz wird in der Dienstzentrale automatisch ermittelt und basiert beispielsweise auf einer Referenzangabe, beispielsweise ein benutzerdefiniertes Referenzwort, das im Schritt S5 vom Kommunikationsendgerät 1 an die Dienstzentrale 4 übermittelt wurde.

Im Schritt S7 leitet die Dienstzentrale 4 die Anfrage zusammen mit der im Schritt S6 ermittelten Anfragereferenz über das Telekommunikationsnetz 3 an die Kommunikationsendgeräte 1' weiter, die durch die im Schritt S5 empfangenen Kommunikationsadressen bestimmt sind. Vorzugsweise umfassen die weitergeleiteten Anfragen zudem mindestens Angaben über die verfügbaren physikalischen Kommunikationsschnittstellen im Kommunikationsendgerät 1, die in den im Schritt S5 empfangenen Konfigurationsdaten enthaltenen sind. Die weitergeleiteten Anfragen können auch die gesamten im Schritt S5 empfangenen Konfigurationsdaten enthalten. Die Anfrage umfasst beispielsweise auch die Kommunikationsadresse des Kommunikationsendgeräts 1', die durch die Dienstzentrale 4 aus dem Telekommunikationsnetz 3 (HLR) bestimmt wird.

Im Schritt S8 wird in den Kommunikationsendgeräten 1' durch das Antwortmodul 12 der Benutzer angefragt, ob er sich mit seinem Kommunikationsendgerät 1' am Aufbau des virtuellen privaten Kommunikationsnetzwerks beteiligen möchte. Dies geschieht beispielsweise über die Anzeige 17 der Kommunikationsendgeräte 1', wo dem Benutzer beispielsweise die Anfragereferenz und die Kommunikationsadressen des anfragenden Kommunikationsendgeräts 1 und der anderen angefragten Kommunikationsendgeräte 1' angezeigt werden. Falls der Benutzer eine Beteiligung ablehnt, stellt das Antwortmodul 12 des betreffenden Kommunikationsendgeräts 1' eine negative Antwort bereit, die im Schritt S9 über das Telekommunikationsnetz 3 an die Dienstzentrale 4 übermittelt wird. Falls der Benutzer sich beteiligen möchte, stellt das Antwortmodul 12 des betreffenden Kommunikationsendgeräts 1' eine affirmative Antwort bereit, die im Schritt S9 über das Telekommunikationsnetz 3 an die Dienstzentrale 4 übermittelt wird. Die affirmative Antwort umfasst Konfigurationsdaten des betreffenden Kommunikationsendgeräts 1', die durch das Konfigurationsmodul 11 des betreffenden Kommunikationsendgeräts 1' bestimmt werden. Diese Konfigurationsdaten werden jeweils basierend auf den im betreffenden Kommunikationsendgerät 1' gespeicherten Konfigurationsdaten sowie basierend auf der Verfügbarkeit von physikalischen Kommunikationsschnittstellen des Kommunikationsmoduls 16 im betreffenden Kommunika-tionsendgerät 1' bestimmt. In einer Ausführungsvariante werden diese Konfigurationsdaten durch das Konfigurationsmodul 11 des betreffenden Kommunikationsendgeräts 1' zudem auf Grund der im Schritt S7 empfangenen Konfigurationsdaten bestimmt, wobei Konfigurationsdaten für die gemeinsam verfügbaren physikalischen Kommunikationsschnittstellen ermittelt werden.

Im Schritt S10 werden die im Schritt S9 empfangenen Antworten in der Dienstzentrale 4 entgegengenommen und die darin enthaltenen Konfigurationsdaten gespeichert. Dabei werden die empfangenen Konfigurationsdaten jeweils der vorgängig erwähnten Anfragereferenz und den Kommunikationsadressen der Kommunikationsendgeräte 1, 1' zugeordnet. Die Speicherung und Weiterverwendung der empfangenen Konfigurationsdaten durch die Dienstzentrale 4 kann vom anfragenden Kommunikationsendgerät 1 respektive von seinem Benutzer an die Bedingung geknüpft werden, dass sämtliche oder zumindest ein definierter Anteil der im Schritt S9 empfangenen Antworten affirmativ sind.

Im Schritt S10 erstellt vorzugsweise die Dienstzentrale 4 zudem basierend auf den empfangenen Konfigurationsdaten individuelle Konfigurationsdatensätze für die beteiligten Kommunikationsendgeräte 1 und 1'. Ein Konfigurationsdatensatz umfasst jeweils die Konfigurationsdaten für eines der beteiligten Kommunikationsendgeräte 1, 1', die im betreffenden beteiligten Kommunikationsendgerät 1, 1' für den Aufbau und Betrieb des gesicherten virtuellen privaten Kommunikationsnetzes verwendet werden. Die Konfigurationsdatensätze umfassen einheitliche Kommunikationsparameter für sämtliche physikalischen Kommunikationsschnittstellen, die in allen beteiligten Kommunikationsendgeräten 1, 1' verfügbar sind, und für die darauf basierenden Kommunikationsprotokolle, die von allen beteiligten Kommunikationsendgeräten 1, 1' unterstützt werden. Zudem umfassen die Konfigurationsdatensätze einheitliche Sicherheitsparameter für sämtliche kryptografischen Algorithmen und Verfahren, die von allen beteiligten Kommunikationsendgeräten 1, 1' unterstützt werden. An dieser Stelle soll darauf hingewiesen werden, dass in einem Konfigurationsdatensatz auch ausführbare Softwaremodule mit Kommunikationsprotokollen und kryptografischen Mechanismen enthalten sein können, die im betreffenden beteiligten Kommunikationsendgerät 1, 1' zum Zeitpunkt der Anfrage fehlen und nicht unterstützt werden. Schliesslich umfassen die Konfigurationsdatensätze jeweils die kryptografischen Schlüssel für eines der beteiligten Kommunikationsendgeräte 1, 1', welche im betreffenden beteiligten Kommunikationsendgerät 1, 1' für den Aufbau und Betrieb des gesicherten virtuellen privaten Kommunikationsnetzes 2 verwendet werden. Die kryptografischen Schlüssel in den individuellen Konfigurationsdatensätzen werden entweder durch die Dienstzentrale 4 erzeugt und zugewiesen oder sie werden durch die Dienstzentrale 4 aus den empfangenen Konfigurationsdaten entnommen und auf die individuellen Konfigurationsdatensätze verteilt.

Im Schritt S11 werden die individuellen Konfigurationsdatensätze von der Dienstzentrale 4 über das Telekommunikationsnetz 3 an die betreffenden beteiligten Kommunikationsendgeräte 1, 1' übermittelt. Das anfragende Kommunikationsendgerät 1 wird gegebenenfalls über negative Antworten informiert. Die Übermittlung der Konfigurationsdatensätze über das Telekommunikationsnetz 3 kann verschlüsselt erfolgen, beispielsweise unter Zuhilfenahme von Sicherheitsmechanismen des Telekommunikationsnetzes 3.

An dieser Stelle soll angefügt werden, dass die mit Bezug auf den Schritt S10 beschriebenen Funktionen zum Erstellen der individuellen Konfigurationsdatensätze für die beteiligten Kommunikationsendgeräte 1 und 1' in einer Ausführungsvariante als Alternative im anfragenden Kommunikationsendgerät 1 durchgeführt werden können. Zu diesem Zweck werden die im Schritt S9 empfangenen Konfigurationsdaten der Kommunikationsendgeräte 1' von der Dienstzentrale 4 in einem ersten nicht dargestellten Schritt an das Kommunikationsendgerät 1 weitergeleitet. Für diese Ausführungsvariante ist das Konfigurationsmodul 11 des Kommunikationsendgeräts 1 so eingerichtet, dass es basierend auf den im ersten nicht dargestellten Schritt empfangenen Konfigurationsdaten der Kommunikationsendgeräte 1' und basierend auf den lokal gespeicherten Konfigurationsdaten 14 in einem zweiten nicht dargestellten Schritt Konfigurationsdatensätze für den Aufbau des gesicherten virtuellen privaten Kommunikationsnetzes 2 erstellt. Die im zweiten nicht dargestellten Schritt erstellten Konfigurationsdatensätze werden durch das Konfigurationsmodul 11 des Kommunikationsendgeräts 1 in einem dritten nicht dargestellten Schritt über das Telekommunikationsnetz 3 zur Speicherung an die Kommunikationsendgeräte 1' übermittelt respektive lokal im Kommunikationsendgerät 1 gespeichert. Danach wird im Schritt S12 fortgefahren, wobei die Rückbezüge in der Beschreibung des Schritts S12 auf den Schritt S11 sich entsprechend auf den dritten nicht dargestellten Schritt beziehen.

Im Schritt S12 werden die Kommunikationsmodule 16 der beteiligten Kommunikationsendgeräte 1, 1' jeweils auf der Grundlage der im Schritt S11 empfangenen Konfigurationsdatensätze durch die Konfigurationsmodule 11 konfiguriert. Gegebenfalls werden im Schritt S12 in den betreffenden beteiligten Kommunikationsendgeräten 1, 1' ausführbare Softwaremodule installiert, die in den Konfigurationsdatensätzen enthalten sind. Im Schritt S12 werden danach die Kommunikationsparameter und Sicherheitsparameter, die in den empfangenen Konfigurationsdatensätzen enthalten sind, in den Kommunikationsmodulen 16 der betreffenden beteiligten Kommunikationsendgeräte 1, 1' geladen. Schliesslich werden die in den empfangenen Konfigurationsdatensätzen enthaltenen kryptografischen Schlüssel jeweils in den Kommunikationsmodulen 16 der betreffenden beteiligten Kommunikationsendgeräte 1, 1' den entsprechenden kryptografischen Mechanismen zugeordnet gespeichert.

Im Schritt S13 wird das gesicherte virtuelle private Kommunikationsnetz 2 zwischen den beteiligten Kommunikationsendgeräten 1, 1' unter der Kontrolle der Netzwerkmodule 13 aufgebaut und Applikationen der beteiligten Kommunikationsendgeräten 1, 1' können Daten über das gesicherte virtuelle private Kommunikationsnetz 2 austauschen. Bei mehreren gemeinsam verfügbaren physikalischen Kommunikationsschnittstellen wird die verwendete physikalische Kommunikationsschnittstelle durch das Netzwerkmodul 13 des anfragenden Kommunikationsendgeräts 1 bestimmt, das den Aufbau des gesicherten virtuellen privaten Kommunikationsnetzes 2 einleitet. Unter Verwendung des Moduls zur Ausführung von Mobile IP und dem Schnittstellenverwaltungsmodul kann die verwendete physikalische Kommunikationsschnittstelle zudem dynamisch verändert werden. Wenn dabei mehrere beteiligte Kommunikationsendgeräte 1, 1' die gemeinsam verwendete physikalische Kommunikationsschnittstelle ändern, werden nötigenfalls entsprechende Konfigurationsdatensätze zuvor über das virtuelle private Kommunikationsnetz 2 oder über das Telekommunikationsnetz 3 ausgehandelt. Es ist auch möglich, in einem gesicherten virtuellen privaten Kommunikationsnetz 2 gleichzeitig unterschiedliche physikalische Kommunikationsschnittstellen und/oder Kommunikationsprotokolle zwischen verschiedenen beteiligten Kommunikationsendgeräten 1,1' zu verwenden, beispielsweise können die Kommunikationsendgeräte 1' untereinander über eine Infrarotschnittstelle kommunizieren, während das Kommunikationsendgerät 1 mit den Kommunikationsendgeräten 1' über eine Funkschnittstelle kommuniziert.

Die Dienstzentrale 4 umfasst ein nicht dargestelltes Verrechnungsmodule, um Kosten für die Entgegennahme und Weiterleitung einer Anfrage für den Aufbauen eines virtuellen privaten Kommunikationsnetzes 2 sowie den diesbezüglichen Austausch von Konfigurationsdaten den Benutzern der beteiligten Kommunikationsendgeräte 1, 1' zu verrechnen.

Abschliessend soll festgehalten werden, dass das beschriebene Verfahren zum Aufbauen des virtuellen privaten Kommunikationsnetzes 2 zwischen den Kommunikationsendgeräten 1, 1' auch mit mehreren Dienstzentralen 4 durchgeführt werden kann, die mit Telekommunikationsnetzen 3 von verschiedenen Betreibern verbunden sind.

## Patentansprüche

1. Verfahren zum Aufbauen eines virtuellen privaten Kommunikationsnetzes (2) zwischen Kommunikationsendgeräten (1, 1'), umfassend:
- Übermitteln (S1) einer Benutzeridentifizierung (151) von einem ersten der Kommunikationsendgeräte (1) an ein Telekommunikationsnetz (3),
- Authentifizieren der Benutzeridentifizierung (151) im Telekommunikationsnetz (3), und
- Aufbau (S13) eines gesicherten virtuellen privaten Kommunikationsnetzes (2) zwischen dem ersten Kommunikationsendgerät (1) und den zweiten Kommunikationsendgeräten (1') unter Verwendung von ausgetauschten Konfigurationsdaten über ein geteiltes Kommunikationsmedium,
**gekennzeichnet, durch**:
- Übermitteln einer Anfrage (S5) mit Kommunikationsadressen eines oder mehrerer zweiter der Kommunikationsendgeräte (1') **durch** das erste Kommunikationsendgerät (1) über das Telekommunikationsnetz (3) an eine computer-basierte Dienstzentrale (4),
- Weiterleiten der Anfrage (S7) **durch** die Dienstzentrale (4) über das Telekommunikationsnetz (3) an die **durch** die Kommunikationsadressen bestimmten zweiten Kommunikationsendgeräte (1'),
- Übermitteln einer jeweils affirmativen oder negativen Antwort (S9) **durch** die zweiten Kommunikationsendgeräte (1') über das Telekommunikationsnetz (3) an die Dienstzentrale (4), wobei eine affirmative Antwort Konfigurationsdaten mit Kommunikationsparametern und mit Sicherheitsparametern des betreffenden der zweiten Kommunikationsendgeräte (1') umfasst, und
- Austauschen von Konfigurationsdaten (S9, S11) mit Kommunikationsparametern und mit Sicherheitsparametern zwischen dem ersten Kommunikationsendgerät (1) und den zweiten Kommunikationsendgeräten (1, 1') über das Telekommunikationsnetz (3).

2. Verfahren nach Anspruch 1, **dadurch gekennzeichnet, dass** mit der Anfrage (S5) des ersten Kommunikationsendgeräts (1) Konfigurationsdaten, die Kommunikationsparameter und Sicherheitsparameter des ersten Kommunikationsendgeräts (1) umfassen, an die Dienstzentrale (4) übermittelt werden, dass die Dienstzentrale (4) basierend auf den Konfigurationsdaten vom ersten Kommunikationsendgerät (1) und basierend auf den Konfigurationsdaten der zweiten Kommunikationsendgeräte (1') Konfigurationsdatensätze für den Aufbau des gesicherten virtuellen privaten Kommunikationsnetzes (2) zwischen dem ersten Kommunikationsendgerät (1) und den zweiten Kommunikationsendgeräten (1') erstellt (S10), dass die Dienstzentrale (4) die erstellten Konfigurationsdatensätze über das Telekommunikationsnetz (3) zur Speicherung an das erste Kommunikationsendgerät (1) und an die zweiten Kommunikationsendgeräte (1') übermittelt (S11), und dass das erste Kommunikationsendgerät (1) und die zweiten Kommunikationsendgeräte (1') das gesicherte virtuelle private Kommunikationsnetz (2) zwischen dem ersten Kommunikationsendgerät (1) und den zweiten Kommunikationsendgeräten (1') basierend auf den gespeicherten Konfigurationsdatensätzen aufbauen (S13).

3. Verfahren nach Anspruch 1, **dadurch gekennzeichnet, dass** mit der Anfrage (S5) des ersten Kommunikationsendgeräts (1) Konfigurationsdaten mit Kommunikationsparametern und mit Sicherheitsparametem des ersten Kommunikationsendgeräts (1) an die Dienstzentrale (4) übermittelt werden, dass die Konfigurationsdaten des ersten Kommunikationsendgeräts (1) durch die Dienstzentrale (4) mit der Anfrage an die zweiten Kommunikationsendgeräte (1') übermittelt (S5) werden, dass die zweiten Kommunikationsendgeräte (1') die Konfigurationsdaten zur Übermittlung an die Dienstzentrale (4) basierend auf den empfangenen Konfigurationsdaten des ersten Kommunikationsendgeräts (1) bestimmen (S8), dass die Dienstzentrale (4) basierend auf den Konfigurationsdaten vom ersten Kommunikationsendgerät (1) und basierend auf den Konfigurationsdaten der zweiten Kommunikationsendgeräte (1') Konfigurationsdatensätze für den Aufbau des gesicherten virtuellen privaten Kommunikationsnetzes (2) zwischen dem ersten Kommunikationsendgerät (1) und den zweiten Kommunikationsendgeräten (1') erstellt (S10), dass die Dienstzentrale (4) die erstellten Konfigurationsdatensätze über das Telekommunikationsnetz (3) zur Speicherung an das erste Kommunikationsendgerät (1) und an die zweiten Kommunikationsendgeräte (1') übermittelt (S11), und dass das erste Kommunikationsendgerät (1) und die zweiten Kommunikationsendgeräte (1') das gesicherte virtuelle private Kommunikationsnetz (2) zwischen dem ersten Kommunikationsendgerät (1) und den zweiten Kommunikationsendgeräten (1') basierend auf den gespeicherten Konfigurationsdatensätzen aufbauen.

4. Verfahren nach Anspruch 1, **dadurch gekennzeichnet, dass** die Dienstzentrale (4) die Antworten der zweiten Kommunikationsendgeräte (1') an das erste Kommunikationsendgerät (1) weiterleitet, dass das erste Kommunikationsendgerät (1) basierend auf den Konfigurationsdaten der zweiten Kommunikationsendgeräte (1') und basierend auf Konfigurationsdaten (14) mit Kommunikationsparametern und mit Sicherheitsparametern, die im ersten Kommunikationsendgerät (1) gespeichert sind, Konfigurationsdatensätze für den Aufbau des gesicherten virtuellen privaten Kommunikationsnetzes (2) zwischen dem ersten Kommunikationsendgerät (1) und den zweiten Kommunikationsendgeräten (1') erstellt, dass das erste Kommunikationsendgerät (1) die erstellten Konfigurationsdatensätze über das Telekommunikationsnetz (3) zur Speicherung an die zweiten Kommunikationsendgeräte übermittelt respektive im ersten Kommunikationsendgerät (1) speichert, und dass das erste Kommunikationsendgerät (1) und die zweiten Kommunikationsendgeräte das gesicherte virtuelle private Kommunikationsnetz (2) zwischen dem ersten Kommunikationsendgerät (1) und den zweiten Kommunikationsendgeräten (1') basierend auf den gespeicherten Konfigurationsdatensätzen aufbauen (S13).

5. Verfahren nach einem der Ansprüche 1 bis 4, **dadurch gekennzeichnet, dass** Mobilfunkendgeräte als Kommunikationsendgeräte (1, 1') verwendet werden, dass ein zelluläres Mobilfunknetz als Telekommunikationsnetz (3) verwendet wird, dass eine IMSI als Benutzeridentifizierung (151) verwendet wird, dass die Benutzeridentifizierung (151) im Mobilfunknetz mittels eines I-dentifizierungsmoduls (15) im Mobilfunkendgerät und mittels einer Authentifizierungseinheit im Mobilfunknetz authentifiziert wird, dass Rufnummern im Mobilfunknetz als Kommunikationsadressen verwendet werden, dass eine auf elektromagnetischen Wellen basierende Kommunikationsschnittstelle als geteiltes Kommunikationsmedium verwendet wird, dass die Kommunikationsparameter Identifizierungen von unterstützten Kommunikationsprotokollen und/oder - schnittstellen umfassen, und dass die Sicherheitsparameter kryptografische Schlüssel umfassen.

6. Computer-basierte Dienstzentrale (4), welche mit einem Telekommunikationsnetz (3) verbindbar ist, in welchem Benutzeridentifizierungen von Kommunikationsendgeräten (1, 1') entgegengenommen und authentifiziert werden,umfassend:
- Mittel zum Entgegennehmen einer Anfrage von einem ersten Kommunikationsendgerät (1) über das Telekommunikationsnetz (3) betreffend den Aufbau eines virtuellen privaten Kommunikationsnetzes (2) zwischen dem ersten Kommunikationsendgerät (1) und einem oder mehreren zweiten Kommunikationsendgeräten (1'), welche Anfrage Kommunikationsadressen der zweiten Kommunikationsendgeräte (1') umfasst,
- Mittel zum Weiterleiten der Anfrage über das Telekommunikationsnetz (3) an die durch die Kommunikationsadressen bestimmten zweiten Kommunikationsendgeräte (1'),
- Mittel zum Entgegennehmen von affirmativen oder negativen Antworten von den zweiten Kommunikationsendgeräten (1') über das Telekommunikationsnetz (3), wobei eine affirmative Antwort Konfigurationsdaten mit Kommunikationsparametern und mit Sicherheitsparametem des betreffenden der zweiten Kommunikationsendgeräte (1') umfasst, und
- Mittel zum Austauschen von Konfigurationsdaten mit Kommunikationsparametern und mit Sicherheitsparametem mit dem ersten Kommunikationsendgerät (1) und mit den zweiten Kommunikationsendgeräten (1') über das Telekommunikationsnetz (3).

7. Dienstzentrale (4) nach Anspruch 6, **dadurch gekennzeichnet, dass** sie Mittel umfasst zum Entgegennehmen von Konfigurationsdaten mit der Anfrage des ersten Kommunikationsendgeräts (1), die Kommunikationsparameter und Sicherheitsparameter des ersten Kommunikationsendgeräts (1) umfassen, dass sie Mittel umfasst, um basierend auf den Konfigurationsdaten vom ersten Kommunikationsendgerät (1) und basierend auf den Konfigurationsdaten der zweiten Kommunikationsendgeräte (1') Konfigurationsdatensätze für den Aufbau eines gesicherten virtuellen privaten Kommunikationsnetzes (2) zwischen dem ersten Kommunikationsendgerät (1) und den zweiten Kommunikationsendgeräten (1') zu erstellen, und dass sie Mittel umfasst, um die erstellten Konfigurationsdatensätze über das Telekommunikationsnetz (3) an das erste Kommunikationsendgerät (1) und an die zweiten Kommunikationsendgeräte (1') zu übermitteln.

8. Dienstzentrale (4) nach Anspruch 6 oder 7, **dadurch gekennzeichnet, dass** sie mit einem zellulären Mobilfunknetz verbindbar ist, in welchem IM-Sls als Benutzeridentifizierungen verwendet werden, die mittels Identifizierungsmodulen (15) in den Kommunikationsendgeräten (1, 1') und mittels einer Authentifizierungseinheit im Mobilfunknetz authentifiziert werden, dass die Kommunikationsadressen Rufnummern im Mobilfunknetz umfassen, dass die Kommunikationsparameter Identifizierungen von unterstützten Kommunikationsprotokollen und/oder -schnittstellen umfassen, und dass die Sicherheitsparameter kryptografische Schlüssel umfassen.

9. Kommunikationsendgerät (1) umfassend: ein Identifizierungsmodul (15) zum Übermitteln einer Benutzeridentifizierung (151) zur Authentifizierung an ein Telekommunikationsnetz (3), ein Kommunikationsmodul (16) für die Kommunikation über ein geteiltes Kommunikationsmedium und ein Netzwerkmodul (13) zum Aufbauen eines gesicherten virtuellen privaten Kommunikationsnetzes (2) zwischen dem Kommunikationsendgerät (1) und den zweiten Kommunikationsendgeräten (1') unter Verwendung von ausgetauschten Konfigurationsdaten über das geteilte Kommunikationsmedium, **gekennzeichnet durch**:
- ein Anfragemodul (10) zum Übermitteln einer Anfrage mit Kommunikationsadressen eines oder mehrerer zweiten Kommunikationsendgeräte (1') über das Telekommunikationsnetz (3) an eine computer-basierte Dienstzentrale (4),
- ein Konfigurationsmodul (11) zum Austauschen von Konfigurationsdaten, die Kommunikationsparameter und Sicherheitsparameter umfassen, mit den zweiten Kommunikationsendgeräten (1') über das Telekommunikationsnetz (3), und
- ein Antwortmodul (12) zum Übermitteln einer affirmativen oder negativen Antwort über das Telekommunikationsnetz (3) an die Dienstzentrale (4) nach dem Empfang einer Anfrage von der Dienstzentrale (4), wobei eine affirmative Antwort Konfigurationsdaten mit Kommunikationsparametern und mit Sicherheitsparametem des Kommunikationsendgeräts (1).

10. Kommunikationsendgerät (1) gemäss Anspruch 9, **dadurch gekennzeichnet, dass** das Anfragemodul (10) ausgebildet ist, um mit der Anfrage Konfigurationsdaten mit Kommunikationsparametern und mit Sicherheitsparametem an die Dienstzentrale (4) zu übermitteln.

11. Kommunikationsendgerät (1) gemäss Anspruch 9 oder 10, **dadurch gekennzeichnet, dass** das Konfigurationsmodul (11) ausgebildet ist, um die in der Antwort an die Dienstzentrale (4) zu übermittelnden Konfigurationsdaten basierend auf Konfigurationsdaten zu bestimmen, die in der empfangenen Anfrage enthalten sind.

12. Kommunikationsendgerät (1) gemäss einem der Ansprüche 9 bis 11, **dadurch gekennzeichnet, dass** das Konfigurationsmodul (11) ausgebildet ist, um Konfigurationsdaten, die Kommunikationsparameter und Sicherheitsparametem der zweiten Kommunikationsendgeräte (1') umfassen, von der Dienstzentrale (4) entgegenzunehmen, dass das Kommunikationsendgerät (1) gespeicherte eigene Konfigurationsdaten (14) mit Kommunikationsparametern und mit Sicherheitsparametem umfasst, dass das Konfigurationsmodul (11) ausgebildet ist, um basierend auf den gespeicherten eigenen Konfigurationsdaten (14) und basierend auf den entgegengenommenen Konfigurationsdaten der zweiten Kommunikationsendgeräte (1') Konfigurationsdatensätze für den Aufbau des gesicherten virtuellen privaten Kommunikationsnetzes (2) zwischen dem ersten Kommunikationsendgerät (1) und den zweiten Kommunikationsendgeräten (1') zu erstellen, dass das Konfigurationsmodul (11) ausgebildet ist, um die erstellten Konfigurationsdatensätze über das Telekommunikationsnetz (3) an die zweiten Kommunikationsendgeräte (1') zu übermitteln respektive lokal im Kommunikationsendgerät (1) zu speichern, und dass das Netzwerkmodul (13) ausgebildet ist, um das gesicherte virtuelle private Kommunikationsnetz (2) zwischen dem Kommunikationsendgerät (1) und den zweiten Kommunikationsendgeräten (1') basierend auf dem lokal gespeicherten Konfigurationsdatensatz aufzubauen.

13. Kommunikationsendgerät (1) gemäss einem der Ansprüche 9 bis 12, **dadurch gekennzeichnet, dass** es als Mobilfunkendgerät für die Kommunikation in einem zellulären Mobilfunknetz ausgeführt ist, dass im Identifizierungsmodul (15) eine IMSI als Benutzeridentifizierung (151) gespeichert ist, dass die Kommunikationsadressen Rufnummern im Mobilfunknetz umfassen, dass das Kommunikationsmodul (16) für die Kommunikation mittels elektromagnetischer Wellen eingerichtet ist, dass die Kommunikationsparameter Identifizierungen von unterstützten Kommunikationsprotokollen und/oder - schnittstellen umfassen, und dass die Sicherheitsparameter kryptografische Schlüssel umfassen.

14. Computerprogrammprodukt (6) umfassend: ein computerlesbares Medium mit darin enthaltenen Computerprogrammcodemitteln zur Steuerung eines oder mehrerer Prozessoren eines ersten Kommunikationsendgeräts (1), derart, dass, beim Betrieb auf dem ersten Kommunikations endgerät, das erste Kommunikationsendgerät (1) eine Benutzeridentifizierung (151) zur Authentifizierung an ein Telekommunikationsnetz (3) übermittelt, wobei das computerlesbares Meduim weitere Computerprogrammcodemittel enthält, die die Prozessoren des ersten Kommunikationsendgeräts (1) derart steuern, dass, beim Betrieb auf dem ersten Kommunikationsendgerät,
das erste Kommunikationsendgerät (1) eine Anfrage mit Kommunikationsadressen eines oder mehrerer zweiten Kommunikationsendgeräte (1') über das Telekommunikationsnetz (3) an eine computer-basierte Dienstzentrale (4) übermittelt,
das erste Kommunikationsendgerät (1) Konfigurationsdaten, die Kommunikationsparameter und Sicherheitsparameter umfassen, mit den zweiten Kommunikationsendgeräten (1') über das Telekommunikationsnetz (3) austauscht,
das erste Kommunikationsendgerät (1) nach dem Empfang einer Anfrage von der Dienstzentrale (4) eine affirmative oder negative Antwort über das Telekommunikationsnetz (3) an die Dienstzentrale (4) übermittelt, wobei eine affirmative Antwort Konfigurationsdaten mit Kommunikationsparametern und mit Sicherheitsparametem des ersten Kommunikationsendgeräts (1) umfasst, und
das erste Kommunikationsendgerät (1) ein gesichertes virtuelles privates Kommunikationsnetz (2) zwischen dem ersten Kommunikationsendgerät (1) und den zweiten Kommunikationsendgeräten (1') unter Verwendung der ausgetauschten Konfigurationsdaten über ein geteiltes Kommunikationsmedium aufbaut.

15. Computerprogrammprodukt (6) gemäss Anspruch 14, **dadurch gekennzeichnet, dass** es weitere Computerprogrammcodemittel umfasst, die die Prozessoren des ersten Kommunikationsendgeräts (1) derart steuern, dass das erste Kommunikationsendgerät (1) mit der Anfrage Konfigurationsdaten mit Kommunikationsparametern und mit Sicherheitsparametem an die Dienstzentrale (4) übermittelt.

16. Computerprogrammprodukt (6) gemäss Anspruch 15, **dadurch gekennzeichnet, dass** es weitere Computerprogrammcodemittel umfasst, die die Prozessoren des ersten Kommunikationsendgeräts (1) derart steuern, dass das erste Kommunikationsendgerät (1) die an die Dienstzentrale (4) zu übermittelnden Konfigurationsdaten basierend auf Konfigurationsdaten bestimmt, die in der empfangenen Anfrage enthalten sind.

17. Computerprogrammprodukt (6) gemäss Anspruch 15 oder 16, **dadurch gekennzeichnet, dass** es weitere Computerprogrammcodemittel umfasst, die die Prozessoren des ersten Kommunikationsendgeräts (1) derart steuern, dass das erste Kommunikationsendgerät (1) Konfigurationsdaten, die Kommunikationsparameter und Sicherheitsparameter der zweiten Kommunikationsendgeräte (1') umfassen, von der Dienstzentrale (4) entgegennimmt, dass das erste Kommunikationsendgerät (1) basierend auf den Konfigurationsdaten der zweiten Kommunikationsendgeräte (1') und basierend auf Konfigurationsdaten (14) des ersten Kommunikationsendgeräts (1), die Kommunikationsparameter und Sicherheitsparameter umfassen und die im ersten Kommunikationsendgerät (1) gespeichert sind, Konfigurationsdatensätze für den Aufbau des gesicherten virtuellen privaten Kommunikationsnetzes (2) zwischen dem ersten Kommunikationsendgerät (1) und den zweiten Kommunikationsendgeräten (1') erstellt, dass das erste Kommunikationsendgerät (1) die erstellten Konfigurationsdatensätze über das Telekommunikationsnetz (3) an die zweiten Kommunikationsendgeräte (1') übermittelt respektive im ersten Kommunikationsendgerät (1) speichert, und dass das erste Kommunikationsendgerät (1) das gesicherte virtuelle private Kommunikationsnetz (2) zwischen dem ersten Kommunikationsendgerät (1) und den zweiten Kommunikationsendgeräten (1') basierend auf dem im ersten Kommunikationsendgerät (1) gespeicherten Konfigurationsdatensatz aufbaut.

## Claims

1. Method for establishing a virtual private communication network (2) between communication terminals (1, 1'), comprising:
- transmitting (S1) a user identification (151) from a first of the communication terminals (1) to a telecommunication network (3),
- authenticating the user identification (151) in the telecommunication network (3), and
- setting up (S13) a secure virtual private communication network (2) between the first communication terminal (1) and the second communication terminals (1') using exchanged configuration data via a shared communication medium,
**characterised by**:
- transmitting a request (S5) with communication addresses of one or more second of the communication terminals (1') by the first communication terminal (1) via the telecommunication network (3) to a computer-based central service unit (4),
- forwarding the request (S7) by the central service unit (4) via the telecommunication network (3) to the second communication terminals (1') identified through the communication addresses,
- transmitting a respectively affirmative or negative reply (S9) by the second communication terminals (1') via the telecommunication network (3) to the central service unit (4), an affirmative reply comprising configuration data with communication parameters and with security parameters of the respective of the second communication terminals (1'), and
- exchanging configuration data (S9, S11) with communication parameters and with security parameters between the first communication terminal (1) and the second communication terminals (1, 1') via the telecommunication network (3).

2. Method according to claim 1, **characterised in that** with the request (S5) of the first communication terminal (1) configuration data comprising the communication parameters and security parameters of the first communication terminal (1) are transmitted to the central service unit (4), **in that**, based on the configuration data of the first communication terminal (1) and based on the configuration data of the second communication terminals (1'), the central service unit (4) prepares (S10) configuration data records for setting up the secure virtual private communication network (2) between the first communication terminal (1) and the second communication terminals (1'), **in that** the central service unit (4) transmits for storage (S11) the prepared configuration data records over the telecommunication network (3) to the first communication terminal (1) and to the second communication terminals (1'), and **in that** the first communication terminal (1) and the second communication terminals (1') form the secure virtual private communication network (2) between the first communication terminal (1) and the second communication terminals (1') based on the stored configuration data records (S13).

3. Method according to claim 1, **characterised in that** with the request (S5) of the first communication terminal (1) configuration data with communication parameters and with security parameters of the first communication terminal (1) are transmitted to the central service unit (4), **in that** the configuration data of the first communication terminal (1) are transmitted (S5) by the central service unit (4) with the request to the second communications terminals (1'), **in that** the second communication terminals (1') determine (S8) the configuration data for transmission to the central service unit (4) based on the received configuration data of the first communication terminal (1), **in that** based on the configuration data from the first communication terminal (1) and based on the configuration data from the second communication terminals (1') the central service unit (4) prepares (S10) configuration data records for setting up the secure virtual private communication network (2) between the first communication terminal (1) and the second communication terminals (1'), **in that** the central service unit (4) transmits (S11) the prepared configuration data records over the telecommunication network (3) for storage to the first communication terminal (1) and the second communication terminals (1'), and **in that** the first communication terminal (1) and the second communication terminals (1') form the secure virtual private communication network (2) between the first communication terminal (1) and the second communication terminals (1') based on the stored configuration data records.

4. Method according to claim 1, **characterised in that** the central service unit (4) forwards the replies of the second communication terminals (1') to the first communication terminal (1), **in that**, based on the configuration data of the second communication terminals (1') and based on configuration data (14) with communication parameters and with security parameters, which are stored in the first communication terminal (1), the first communication terminal (1) prepares configuration data records for setting up the secure virtual private communication network (2) between the first communication terminal (1) and the second communication terminals (1'), **in that** the first communication terminal (1) transmits the prepared configuration data records over the telecommunication network (3) for storage to the second communication terminals or respectively stores them in the first communication terminal (1), and **in that** the first communication terminal (1) and the second communication terminals (1') form (S13) the secure virtual private communication network (2) between the first communication terminal (1) and the second communication terminals (1') based on the stored configuration data records.

5. Method according to one of the claims 1 to 4, **characterised in that** used as the communication terminals (1, 1') are mobile radio terminals, **in that** used as the telecommunication network (3) is a cellular mobile radio network, **in that** used as the user identification (151) is an IMSI, **in that** the user identification (151) is authenticated in the mobile radio network by means of an identification module (15) in the mobile radio terminal and by means of an authentication unit in the mobile radio network, **in that** used as the communication addresses are call numbers in the mobile radio network, **in that** used as the shared communication medium is a communication interface based on electromagnetic waves, **in that** the communication parameters comprise identifications of supported communication protocols and/or communication interfaces, and **in that** the security parameters comprise cryptographic keys.

6. Computer-based central service unit (4), which is connectible to a telecommunication network (2), in which network user identifications of communication terminals (1, 1') are received and authenticated, comprising:
- means for receiving a request from a first communication terminal (1) over the telecommunication network (3) relating to the setting up of a virtual private communication network (2) between the first communication terminal (1) and one or more second communication terminals (1'), which request comprises communication addresses of the second communication terminals (1'),
- means for forwarding the request over the telecommunication network (3) to the second communication terminals (1') identified through the communication addresses,
- means for receiving affirmative or negative replies from the second communication terminals (1') over the telecommunication network (3), an affirmative reply comprising configuration data with communication parameters and with security parameters of the respective of the second communication terminals (1'), and
- means for exchanging configuration data with communication parameters and with security parameters with the first communication terminal (1) and with the second communication terminals (1') over the telecommunication network (3).

7. Central service unit (4) according to claim 6, **characterised in that** it comprises means for receiving with the request from the first communication terminal (1) configuration data comprising the communication parameters and security parameters of the first communication terminal (1), **in that** it comprises means to prepare configuration data records for the setting up of a secure virtual private communication network between the first communication terminal (1) and the second communication terminals (1') based on the configuration data from the first communication terminal (1) and based on the configuration data of the second communication terminals (1'), and **in that** it comprises means to transmit the prepared configuration data records over the telecommunication network (3) to the first communication terminal (1) and to the second communication terminals (1').

8. Central service unit (4) according to claim 6 or 7, **characterised in that** it is connectible to a cellular mobile radio network in which IMSIs are used as user identifications, which are identified by means of identification modules (15) in the communication terminals (1, 1') and by means of an authentication unit in the mobile radio network, **in that** the communication addresses comprise call numbers in the mobile radio network, **in that** the communication parameters comprise identifications of supported communication protocols and/or communication interfaces, and **in that** the security parameters comprise cryptographic keys.

9. Communication terminal (1), comprising: an identification module (15) for transmitting to a telecommunication network (3) a user identification (151) for authentication, a communication module (16) for communication over a shared communication medium and a network module (13) for setting up a secure virtual private communication network (2) between the communication terminal (1) and the second communication terminals (1') using exchanged configuration data over the shared communication medium, **characterised by**:
- a request module (10) for transmitting a request with communication addresses for one or more second communication terminals (1') over the telecommunication network (3) to a computer-based central service unit (4),
- a configuration module (11) for exchanging configuration data comprising the communication parameters and security parameters, with the second communication terminals (1') over the telecommunication network (3), and
- a reply module (12) for transmitting an affirmative or negative reply over the telecommunication network (3) to a central service unit (4) after receiving a request from the central service unit (4), an affirmative reply <comprising> configuration data with communication parameters and with security parameters of the communication terminal (1).

10. Communication terminal (1) according to claim 9, **characterised in that** the request module (10) is designed to transmit with the request to the central service unit (4) configuration data with communication parameters and with security parameters.

11. Communication terminal (1) according to claim 9 or 10, **characterised in that** the configuration module (11) is designed to determine the configuration data to be transmitted in the reply to the central service unit (4) based on configuration data that are contained in the received request.

12. Communication terminal (1) according to one of the claims 9 to 11, **characterised in that** the configuration module (11) is designed to receive from the central service unit (4) configuration data comprising communication parameters and security parameters of the second communication terminals (1'), **in that** the communication terminal (1) comprises stored own configuration data (14) with communication parameters and with security parameters, **in that**, based on the stored own configuration data and based on the received configuration data of the second communication terminals (1'), the configuration module (11) is designed to prepare configuration data records for setting up the secure virtual private communication network (2) between the first communication terminal (1) and the second communication terminals (1'), **in that** the configuration module (11) is designed to transmit the prepared configuration data records over the telecommunication network (3) to the second communication terminals (1'), or respectively store them locally in the communication terminal (1), and **in that** the network module (13) is designed to set up the secure virtual private communication network (2) between the communication terminal (1) and the second communication terminals (1') based on the locally stored configuration data record.

13. Communication terminal (1) according to one of the claims 9 to 12, **characterised in that** it is designed as a mobile radio device for communication in a cellular mobile radio network, **in that** an IMSI is stored as user identification (151) in the identification module (15), **in that** the communication addresses comprise call numbers in the mobile radio network, **in that** the communication module (16) is set up for communication by means of electromagnetic waves, **in that** the communication parameters comprise identifications of supported communication protocols and/or identification interfaces, and **in that** the safety parameters comprise cryptographic keys.

14. Computer program product (6), comprising: a computer-readable medium with computer program code means contained therein for control of one or more processors of a first communication terminal (1) such that, when operating on the first communication terminal, the first communication terminal (1) transmits a user identification (151) for authentication to a telecommunication network (3), the computer-readable medium containing further computer program code means which control the processors of the first communication terminal (1) such that
the first communication terminal (1) transmits a request with communication addresses of one or more second communication terminals (1') over the telecommunication network (3) to a computer-based central service unit (4),
the first communication terminal (1) exchanges configuration data comprising communication parameters and security parameters with the second communication terminals (1') over the telecommunication network (3),
after receiving a request from the central service unit (4), the first communication terminal (1) transmits an affirmative or negative reply over the telecommunication network (3) to the central service unit (4), an affirmative reply comprising configuration data with communication parameters and with security parameters of the first communication terminal (1), and
the first communication terminal (1) sets up a secure virtual private communication network (2) between the first communication terminal (1) and the second communication terminals (1') using the exchanged configuration data via a shared communication medium.

15. Computer program product (6) according to claim 14, **characterised in that** it comprises further computer program code means which control the processors of the first communication terminal (1) in such a way that the first communication terminal (1) transmits with the request to the central service unit (4) configuration data with communication parameters and with security parameters.

16. Computer program product (6) according to claim 15, **characterised in that** it comprises further computer program code means which control the processors of the first communication terminal (1) in such a way that the first communication terminal (1) determines the configuration data to be transmitted to the central service unit (4) based on configuration data which are contained in the received request.

17. Computer program product (6) according to claim 15 or 16, **characterised in that** it comprises further computer program code means which control the processors of the first communication terminal (1) in such a way that the first communication terminal (1) receives configuration data comprising the communication parameters and security parameters of the second communication terminals (1') from the central service unit (4), **in that**, based on the configuration data of the second communication terminals (1') and based on configuration data (14) of the first communication terminal (1) which comprise communication parameters and security parameters and are stored in the first communication terminal (1), the first communication terminal (1) prepares configuration data records for setting up the secure virtual private communication network (2) between the first communication terminal (1) and the second communication terminals (1'), **in that** the first communication terminal (1) transmits the prepared configuration data records over the telecommunication network (3) to the second communication terminals (1') or respectively stores them in the first communication terminal (1), and **in that** the first communication terminal (1) sets up the secure virtual private communication network (2) between the first communication terminal (1) and the second communication terminals (1') based on the configuration data record stored in the first communication terminal (1).

## Revendications

1. Procédé pour l'implantation d'un réseau de communication virtuel privé (2) entre des terminaux de communication (1, 1'), comprenant
- la transmission (S1) d'une identification utilisateur (151) d'un premier des terminaux de communication (1) à un réseau de télécommunication (3),
- l'authentification de l'identification utilisateur (151) dans le réseau de télécommunication (3), et
- l'implantation (S13) d'un réseau de communication virtuel privé sécurisé (2) entre le premier terminal de communication (1) et les seconds terminaux de communication (1') en utilisant des données de configuration échangeables par un support de communication partagé,
**caractérisé par** :
- la transmission d'une requête (S5) avec des adresses de communication d'un ou de plusieurs seconds terminaux de communication (1') par le premier terminal de communication (1) par le réseau de télécommunication (3) à une centrale de service assistée par ordinateur (4),
- le transfert de la requête (S7) par la centrale de service (4) par le réseau de télécommunication (3) aux seconds terminaux de communication (1') définis par les adresses de communication ,
- la transmission d'une réponse respectivement négative ou positive (S9) par les seconds terminaux de communication (1') par le réseau de télécommunication (3) à la centrale de service (4), une réponse affirmative comprenant des données de configuration avec des paramètres de communication et des paramètres de sécurité du second terminal de communication (1') et
- échange de données de configuration (S9, S11) avec des paramètres de communication et des paramètres de sécurité entre le premier terminal de communication (1) et les seconds terminaux de communication (1, 1') par le réseau de télécommunication (3).

2. Procédé selon la revendication 1, **caractérisé en ce qu'**avec la requête (S5) du premier terminal de communication (1) des données de configuration qui comprennent les paramètres de communication et les paramètres de sécurité du premier terminal de communication (1) sont transmises à la centrale de service (4), **en ce que** la centrale de service (4) établit (S10) en se basant sur les données de configuration du premier terminal de communication (1) et en se basant sur les données de configuration des seconds terminaux de communication (1'), des jeux de données de configuration pour l'implantation du réseau de communication virtuel privé sécurisé (2) entre le premier terminal de communication (1) et les seconds terminaux de communication (1'), **en ce que** la centrale de service (4) transmet (S11) les jeux de données de configuration par le réseau de télécommunication (3) pour leur stockage au premier terminal de communication (1) et aux seconds terminaux de communication (1'), et **en ce que** le premier terminal de communication (1) et les seconds terminaux de communication (1') établissent (S13) le réseau de communication virtuel privé (2) entre le premier terminal de communication (1) et les seconds terminaux de communication(1') en se basant sur les jeux de données de configuration stockés.

3. Procédé selon la revendication 1, **caractérisé en ce qu'**avec la requête (S5) du premier terminal de communication (1) des données de configuration qui comprennent les paramètres de communication et les paramètres de sécurité du premier terminal de communication (1) sont transmises à la centrale de service (4), **en ce que** les données de configuration du premier terminal de communication (1) sont transmises (S5) par la centrale de service (4) avec la requête aux seconds terminaux de communication (1'), **en ce que** les seconds terminaux de communication (1') définissent (S8) les données de configuration pour la transmission à la centrale de service (4) en se basant sur les données de configuration reçues du premier terminal de communication (1), **en ce que** la centrale de service (4) établit (S10), en se basant sur les données de configuration du premier terminal de communication (1) et en se basant sur les données de configuration des seconds terminaux de communication (1'), des jeux de données de configuration pour l'implantation du réseau de communication virtuel privé sécurisé (2) entre le premier terminal de communication (1) et les seconds terminaux de communication(1'), **en ce que** la centrale de service (4) transmet (S11) par le réseau de télécommunication (3) les jeux de données établis de configuration pour leur stockage au premier terminal de communication (1) et aux seconds terminaux de communication (1'), et **en ce que** le premier terminal de communication (1) et les seconds terminaux de communication (1') établissent le réseau de communication virtuel privé (2) entre le premier terminal de communication (1) et les seconds terminaux de communication (1') en se basant sur les jeux de données de configuration stockés.

4. Procédé selon la revendication 1, **caractérisé en ce que** la centrale de service (4) transmet les réponses des seconds terminaux de communication (1') au premier terminal de communication (1), **en ce que** le terminal de communication (1) établit en se basant sur les donnés de configuration des seconds terminaux de communication (1') et en se basant sur des données de configuration (14) avec des paramètres de communication et des paramètres de sécurité qui sont stockées dans le premier terminal de communication (1), des jeux de données de configuration pour l'implantation du réseau de communication virtuel privé sécurisé (2) entre le premier terminal de communication (1) et les seconds terminaux de communication (1'), **en ce que** le premier terminal de communication (1) transmet par le réseau de télécommunication (3) les jeux de données de configuration établis pour le stockage aux seconds terminaux de communication respectivement les stocke dans le premier terminal de communication (1) et **en ce que** le premier terminal de communication (1) et les seconds terminaux de communication implantent (S13) le réseau de communication virtuel privé sécurisé (2) entre le premier terminal de communication (1) et les seconds terminaux de communication (1') en se basant sur les jeux de données de configuration stockés.

5. Procédé selon l'une des revendications 1 à 4, **caractérisé en ce que** des terminaux mobiles peuvent être utilisés comme terminaux de communication (1, 1'), **en ce qu'**un réseau mobile cellulaire est utilisé comme réseau de télécommunication (3), **en ce qu'**une IMSI (International Mobile Subscriber Identity = Identité Internationale de L'abonné Mobile) est utilisée comme identification utilisateur (151), **en ce que** l'identification utilisateur (151) est authentifiée au moyen d'un module d'authentification (15) dans le terminal mobile et au moyen d'une unité d'authentification dans le réseau mobile, **en ce que** des numéros d'appel sont utilisés dans le réseau mobile en tant qu'adresse de communication, **en ce qu'**une interface de communication basée sur des ondes électromagnétiques est utilisée comme support de communication partagé, **en ce que** les paramètres de communication comprennent des identifications de protocoles de communication supportés et/ou d'interfaces et **en ce que** les paramètres de sécurité comprennent des clés cryptographiques.

6. Centrale de service (4) qui est reliable à un réseau de télécommunication (3) dans lequel des identifications utilisateur sont réceptionnées et authentifiées par des terminaux de communication (1, 1'), comprenant :
- des moyens pour la réception d'une requête d'un premier terminal de communication (1) par le réseau de télécommunication (3) concernant l'implantation d'un réseau de communication virtuel privé (2) entre le premier terminal de communication (1) et un ou plusieurs seconds terminaux de communication (1'), requête qui comprend des adresses de communication des seconds terminaux de communication (1'),
- des moyens pour le transfert de la requête par le réseau de télécommunication (3) aux seconds terminaux de communication (1') définis par les adresses de communication,
- des moyens pour la réception de réponses affirmatives ou négatives des seconds terminaux de communication (1') par le réseau de télécommunication (3), une réponse affirmative comprenant des données de configuration avec des paramètres de communication et des paramètres de sécurité des seconds terminaux de communication (1') concernés et
- des moyens pour l'échange de données de configuration avec des paramètres de communication et des paramètres de sécurité avec le premier terminal de communication (1) et les seconds terminaux de communication (1') par le réseau de télécommunication (3).

7. Centrale de service (4) selon la revendication 6, **caractérisée en ce qu'**elle comprend des moyens pour la réception de données de configuration avec la requête du premier terminal de communication (1), qui comporte des paramètres de communication et des paramètres de sécurité du premier terminal de communication (1), **en ce qu'**elle comprend des moyens pour établir en se basant sur les données de configuration du premier terminal de communication (1) et en se basant sur les données de configuration des seconds terminaux de communication (1'), des jeux de données de configuration pour l'implantation du réseau de communication virtuel privé sécurisé (2) entre le premier terminal de communication (1) et les seconds terminaux de communication (1') et **en ce qu'**elle comprend des moyens pour transmettre les jeux de données de configuration par le réseau de télécommunication (3) au premier terminal de communication (1) et aux seconds terminaux de communication (1').

8. Centrale de service (4) selon la revendication 8 ou 9, **caractérisée en ce qu'**elle peut être reliée à un réseau mobile cellulaire dans lequel des IMSI (International Mobile Subscriber Identity = Identité Internationale de L'abonné Mobile) sont utilisées comme identifications utilisateurs qui sont authentifiées au moyen de modules d'identification (15) dans les terminaux de communication (1, 1') et au moyen d'une unité d'authentification dans le réseau mobile, **en ce que** les paramètres de communication comprennent des numéros de téléphone dans le réseau mobile, **en ce que** les paramètres de communication comprennent des identifications de protocoles de communication et/ou d'interfaces de communication supportés et **en ce que** les paramètres de sécurité comprennent des clés cryptographiques.

9. Terminal de communication (1) comprenant : un module d'identification (15) pour la transmission d'une identification utilisateur (151) pour l'authentification à un réseau de télécommunication (3), un module de communication (16) pour la communication par un support de communication partagé et un module de réseau (13) pour l'implantation d'un réseau de communication virtuel privé sécurisé (2) entre le terminal de communication (1) et les seconds terminaux de communication (1') en utilisant des données de configuration échangées par le support de communication partagé, **caractérisé par** :
- un module de requête (10) pour la transmission d'une requête avec des adresses de communication d'un ou de plusieurs seconds terminaux de communication (1') par le réseau de télécommunication (3) à une centrale de service assistée par ordinateur (4),
- un module de configuration (11) pour l'échange de données de configuration qui comprennent des paramètres de communication et des paramètres de sécurité entre les seconds terminaux de communication (1') par le réseau de télécommunication (3), et
- un module de réponse (12) pour la transmission d'une réponse respectivement négative ou positive par le réseau de télécommunication (3) à la centrale de service (4), une réponse affirmative comprenant des données de configuration avec des paramètres de communication et des paramètres de sécurité du terminal de communication (1).

10. Terminal de communication (1) selon la revendication 9, **caractérisé en ce que** le module de requête (10) est configuré pour transmettre des données de configuration avec des paramètres de communication et des paramètres de sécurité à la centrale de service (4).

11. Terminal de communication (1), selon la revendication 9 ou 10, **caractérisé en ce que** le module de configuration (11) est configuré pour déterminer les données de configuration à transmettre dans la réponse à la centrale de service (4) en se basant sur des données de configuration qui sont contenues dans la requête reçue.

12. Terminal de communication (1), selon l'une des revendications 9 à 11, **caractérisé en ce que** le module de configuration (11) est configuré pour réceptionner de la centrale de service (4) des données de configuration qui comprennent des paramètres de communication et des paramètres de sécurité des seconds terminaux de communication (1'), **en ce que** le terminal de communication (1) comprend ses propres données de configuration stockées (14) avec des paramètres de communication et des paramètres de sécurité, **en ce que** le module de configuration (11) est configuré pour établir, en se basant sur les propres données de configuration stockées (14) et en se basant sur les données de configuration réceptionnées des seconds terminaux de communication (1'), des jeux de données de communication pour l'implantation du réseau de communication virtuel privé sécurisé (2) entre le premier terminal de communication (1) et les seconds terminaux de communication (1'), **en ce que** le module de configuration (11) est configuré pour transmettre les jeux de données de configuration établis par le réseau de télécommunication (3) aux seconds terminaux de communication (1'), respectivement de les stocker localement dans le terminal de communication (1) et **en ce que** le module de réseau (13) est configuré pour implanter le réseau de communication virtuel privé sécurisé (2) entre le terminal de communication (1) et les seconds terminaux de communication (1') en se basant sur le jeu de données de configuration stocké localement.

13. Terminal de communication (1) selon l'une des revendications 9 à 12, **caractérisé en ce qu'**il est réalisé comme un terminal mobile pour la communication dans un réseau cellulaire, **en ce que** dans le module d'identification (15) une IMSI est stockée en tant qu'identification utilisateur (151), **en ce que** les adresses de communication comprennent des numéros de téléphones dans le réseau mobile, **en ce que** le module de communication (16) est prévu pour la communication au moyen d'ondes électromagnétiques, **en ce que** les paramètres de communication comprennent des identifications de protocoles et/ou interfaces de communication supportés et **en ce que** les paramètres de sécurité comprennent des clés cryptographiques.

14. Produit de programme informatique (6) comprenant : un support assisté par ordinateur avec des moyens de codage de programme informatique pour la commande d'un ou de plusieurs processeurs d'un premier terminal de communication (1) de sorte que lors du fonctionnement sur le premier terminal de communication, le premier terminal de communication (1) transmet une identification utilisateur (151) pour l'authentification à un réseau de télécommunication (3), le support assisté par ordinateur comprenant d'autres moyens de codage de programme d'ordinateur qui commandent les processeurs du premier terminal de communication (1) de sorte que lors du fonctionnement sur le premier terminal de communication, le premier terminal de communication (1) transmet une requête avec des adresses de communication d'un ou de plusieurs terminaux de communication (1') par le réseau de télécommunication (3) à une centrale de service (4) assistée par informatique,
que le premier terminal de communication (1) échange avec les seconds terminaux de communication (1') par le réseau de télécommunication (3) des données de configuration qui comprennent des paramètres de communication et des paramètres de sécurité,
que le premier terminal de communication (1) transmet après la réception d'une requête par la centrale de service (4), une réponse négative ou affirmative par le réseau de télécommunication (3) à la centrale de service (4), une réponse affirmative comprenant des données de configuration avec des paramètres de communication et des paramètres de sécurité du premier terminal de communication (1), et
que le premier terminal de communication (1) implante un réseau de communication virtuel privé sécurisé (2) entre le premier terminal de communication (1) et les seconds terminaux de communication (1') en utilisant des données de configuration échangées par un support partagé de communication.

15. Produit de programme informatique (6) selon la revendication 14, **caractérisé en ce qu'**il comprend d'autres moyens de codage de programme informatique qui commandent les processeurs du premier terminal de communication (1), de sorte que le premier terminal de communication (1) transmet avec la requête des données de configuration avec des paramètres de communication et des paramètres de sécurité à la centrale de service (4).

16. Produit de programme informatique (6) selon la revendication 15, **caractérisé en ce qu'**il comprend d'autres moyens de codage de programme informatique qui commandent les processeurs du premier terminal de communication (1), de sorte que le premier terminal de communication (1) définit les données de configurations à transmettre à la centrale de service (4) en se basant sur des données de configuration qui sont contenues dans la requête reçue.

17. Produit de programme informatique (6) selon la revendication 15 ou 16, **caractérisé en ce qu'**il comprend d'autres moyens de codage de programme informatique qui commandent les processeurs du premier terminal de communication (1), de sorte que le premier terminal de communication (1) réceptionne de la centrale de service (4) des données de configuration qui comprennent des paramètres de communication et des paramètres de sécurité des seconds terminaux de communication (1'), **en ce que** le premier terminal de communication (1) établit en se basant sur des données de configuration des seconds terminaux de communication (1') et en se basant sur des données de configuration (14) du premier terminal de communication (1) qui comprennent des paramètres de communication et des paramètres de sécurité et qui sont stockées dans le premier terminal de communication (1), des jeux de données de configuration pour l'implantation du réseau de communication virtuel privé sécurisé (2) entre le premier terminal de communication (1) et les seconds terminaux de communication (1'), **en ce que** le premier terminal de communication
(1) transmet par le réseau de réseau de télécommunication (3) les jeux de données de configuration définis aux seconds terminaux de communication (1') respectivement les stocke dans le premier terminal de communication (1), et **en ce que** le premier terminal de communication (1) implante le réseau de communication virtuel privé sécurisé (2) entre le premier terminal de communication (1) et les seconds terminaux de communication (1') en se basant sur le jeu de données de configuration stocké dans le premier terminal de communication (1).
